# EUROPÄISCHE PATENTSCHRIFT

(11) **EP 1 775 004 B1**
(45) Veröffentlichungstag und Bekanntmachung des Hinweises auf die Patenterteilung: **15.04.2009**
(21) Anmeldenummer: 06119225.8
(22) Anmeldetag: 21.08.2006
(51) Int. Cl.: B01D 33/21

(54) **Filtereinrichtung**
Filter device
Ensemble filtre

(30) Priorität: 14.10.2005 DE 102005049737; 25.11.2005 DE 102005056586
(43) Veröffentlichungstag der Anmeldung: 18.04.2007
(73) Patentinhaber: Hans Huber AG Maschinen- und Anlagenbau, D-92334 Berching (DE)
(72) Erfinder: Stadler, Bernhard, 92342 Freystadt-Burggriesbach (DE)
(74) Vertreter: Bergmeier, Werner

(56) Entgegenhaltungen:
- EP-A- 1 433 511
- EP-A2- 0 753 349
- WO-A-99/46025
- US-A- 3 245 536
- US-A- 5 679 249

## Beschreibung

Die vorliegende Erfindung betrifft eine Filtereinrichtung für einen eine ungeklärte, verschmutzte Flüssigkeit, insbesondere Abwasser, enthaltenden Behälter zum Klären dieser Flüssigkeit, bestehend aus mehreren voneinander beabstandeten Filterelementen, die kreis- oder polygonförmig an einer drehbar gelagerten Hohlwelle angeordnet sind, wobei die Filterelemente mit der Hohlwelle verbunden sind um geklärte Flüssigkeit als Permeat durch die Hohlwelle aus dem Behälter über eine stationäre Rohrleitung abzuführen.

Eine gattungsgemäße Filtereinrichtung ist beispielsweise aus der WO 01/80971 A1 bekannt. In einem Behälter befindet sich ungeklärte Flüssigkeit, welche durch Filterelemente einer Filtereinrichtung geklärt wird. Die geklärte Flüssigkeit wird als Permeat über ein Leitungssystem einer Hohlwelle zugeführt. Die Übergabe des Permeats aus der Hohlwelle in eine stationäre Rohrleitung, mit welcher das Permeat aus dem Behälter gefördert wird, geschieht in einer Drehgelenkslagerung, welche die Permeatleitung gegenüber der ungeklärten Flüssigkeit abdichten soll. Nachteilig ist hierbei, dass bei Versagen der Abdichtungen ungeklärte Flüssigkeit in das Permeat gelangen kann und somit die bereits geklärte Flüssigkeit erneut verunreinigt. Dies führt zu erheblichen Beeinträchtigungen der Abwasserreinigung.

Die WO 99/46025 offenbart die Abdichtung einer rotierenden Welle gegenüber einem stationären Gehäuse. Die Abdichtung der Welle nach außen er folgt über ein Dichtungssystem, welches u. a. einen Raum aufweist, in welchem sich ein unter Überdruck befindliches Sperrmedium befindet. Die Vorrichtung dient zum Filtern einer Flüssigkeit. Die Welle kann von einer gefilterten Flüssigkeit umgeben sein, die gegenüber der ungefilterten Flüssigkeit sicher abgedichtet sein soll. Das Sperrmedium ist beispielsweise ungefilterte Flüssigkeit, welche mit Überdruck als Sperrmedium in den Raum eingeleitet ist. Nachteilig ist hierbei, dass bei einem Versagen der Abdichtung des Raums gegenüber der gefilterten Flüssigkeit ungefilterte Flüssigkeit in die gefilterte Flüssigkeit eindringen kann.

Aufgabe der vorliegenden Erfindung ist es, sicherzustellen, dass das Eindringen von Abwasser in das Permeat zuverlässig verhindert wird.

Die Aufgabe wird gelöst mit einer Filtereinrichtung mit den Merkmalen des Anspruches 1.

Trennt die drehende Hohlwelle über zumindest zwei Dichtungen das Abwasser von dem Permeat und ist zwischen den Dichtungen ein Medium zum Trennen von ungeklärter, z.B. Abwasser, und geklärter Flüssigkeit, z.B. Permeat, angeordnet, so kommen beim Versagen einer der Dichtungen die beiden Flüssigkeiten dennoch nicht miteinander in Berührung bzw. es ist sichergestellt, dass in jedem Fall das Abwasser nicht in die Permeatleitung gelangen kann. Die der beschädigten Dichtung zugewandte Flüssigkeit wird hierdurch erst in das Medium eindringen. Vorteilhafterweise ist das Volumen dieses sogenannten Sperrmediums ausreichend groß, dass eine genügend lange Reaktionszeit zum Entfernen der Flüssigkeit aus dem Sperrmedium bleibt, bevor sich die beiden Flüssigkeiten in der Permeatleitung vereinigen würden. Die undichte Flüssigkeit strömt zuerst in den Raum des Mediums und kann aus diesem wieder entfernt werden, ohne dass das Permeat verunreinigt wird.

Ist das Sperrmedium flüssig oder gasförmig, z.B. Luft oder Wasser, so ist eine sehr einfache aber dennoch wirkungsvolle Trennung von Abwasser und Permeat möglich. Das Wasser darf nicht ungereinigt sein, damit bei einem Eindringen dieses Sperrmediums in das Permeat, das Permeat nicht durch die Sperrflüssigkeit verunreinigt wird.

Weist das Sperrmedium gegenüber dem Abwasser oder dem Permeat einen Überdruck auf, so wird bei einer Undichtigkeit das Sperrmedium in Richtung zum Abwasser oder zum Permeat strömen. Eine zusätzliche Trennfunktion zwischen Abwasser und Permeat wird hierdurch erzielt.

Ist an der Übergangsstelle zwischen Hohlwelle und stationärer Rohrleitung ein abgedichteter Sickerkasten angeordnet, der den geklärten von dem ungeklärten Flüssigkeitsbereich trennt, so ist auch bei Versagen einer der Dichtungen sichergestellt, dass die beiden Flüssigkeitsströme nicht miteinander in Kontakt kommen. Es wird vielmehr zuerst die Flüssigkeit in den Sickerkasten eindringen und weiterhin von der anderen Flüssigkeit getrennt bleiben. Für Instandsetzungsmaßnahmen bleibt genügend Zeit, ohne dass zwischenzeitlich das gereinigte Wasser verunreinigt werden würde. Es ist damit eine zuverlässige Verbindung zwischen der sich drehenden Filtereinrichtung und einer stationären Rohrleitung geschaffen, die außerdem ermöglicht, dass eine Undichtigkeit bereits sehr früh, das heißt insbesondere bereits bevor sich die Flüssigkeiten in dem Permeatstrom vermischen, festgestellt werden kann.

Das Permeat, das durch die Hohlwelle aus dem Behälter abgeführt wird, kann besonders sicher von dem Abwasser getrennt werden, wenn die Hohlwelle eine axiale Öffnung aufweist. Die axiale Öffnung dient zum Abführen des Permeats aus dem Behälter mit der ungeklärten Flüssigkeit. Im Gegensatz zum Stand der Technik, bei welchem über einen radial an der Hohlwelle angeordneten Absaugkanal das Permeat abgeführt wird, ist bei einer axialen Öffnung der Hohlwelle die Abdichtung wesentlich zuverlässiger durchzuführen. Die Konstruktion kann dabei so ausgeführt werden, dass auch bei Versagen von einzelnen Dichtungselementen dennoch sichergestellt ist, dass kein Abwasser in das Permeat eindringt. Die axiale Öffnung ermöglicht eine großflächige Schnittstelle zwischen der sich drehenden Hohlwelle und einer feststehenden Anschlussstelle zum Abführen des Permeats aus dem Behälter. Zudem ist bei einer derartigen Konstruktion ein sehr einfach durchzuführender Toleranzausgleich möglich, welcher zusätzlich eine zuverlässige Abdichtung gegenüber der ungeklärten Flüssigkeit ermöglicht. Dennoch ist nach der Erfindung eine radiale Abführung des Permeats aus der Hohlwelle selbstverständlich nicht ausgeschlossen, wenn einen Undichtigkeit die austretende Flüssigkeit nicht in das Permeat sondern zuerst in den Sickerkasten leitet.

Besonders vorteilhaft ist es, wenn die Hohlwelle in einen feststehenden Anschlussstück, beispielsweise einem Flansch oder Stutzen in der Wand des Behälters mündet. Die Montage der Schnittstelle zwischen drehender Hohlwelle und feststehendem Anschlussstück ist hierdurch besonders einfach möglich, da Anschlussstück und Hohlwelle in ihrer Lage einfach aufeinander abgestimmt werden können.

Ist zwischen Hohlwelle und Abdichtelementen eine Verschleißbuchse angeordnet, so wird vermieden, dass nach einer längeren Betriebsdauer die komplette Hohlwelle oder das Anschlussstück ausgetauscht werden müssen. Es genügt, allein den Verschleiß zu wechseln, was bzgl. der Wartungskosten und Wartungszeit besonders vorteilhaft ist.

Um eine besonders gute Abdichtung zwischen Hohlwelle und Anschlussstück zu erhalten, sind die beiden Bauteile über eine Radial- und/oder Axialdichtung drehbar miteinander verbunden. Hierzu steckt beispielsweise die Hohlwelle in dem Anschlussstück, wobei die Hohlwelle einen kleineren Außendurchmesser aufweist, als der Innendurchmesser des Anschlussstückes. Zwischen dem Außendurchmesser der Hohlwelle und dem Innendurchmesser des Anschlussstückes ist die Radialdichtung angeordnet. Sie gleicht Fluchtungsfehler und Fertigungstoleranzen aus, ohne dass Permeat aus der Abflussleitung austreten oder ungeklärte Flüssigkeit in die Abflussleitung eindringen kann.

Besonders vorteilhaft ist es, wenn die Hohlwelle in einer Lagereinheit mit einem Wälz- und/oder Gleitlager gelagert ist. Diese Lagereinheit kann sehr einfach mit radialen und/oder axialen Dichtelementen, beispielsweise Dichtringen gegenüber der geklärten und der ungeklärten Flüssigkeit abgedichtet werden. Dabei ist es besonders vorteilhaft, wenn jeweils mindestens einer, vorteilhafterweise mehrere Dichtringe sowohl gegenüber der geklärten als auch gegenüber der ungeklärten Flüssigkeit vorgesehen sind. Hierdurch wird eine sehr zuverlässige Abdichtung erzielt, welche auch bei Versagen eines einzelnen Dichtringes weiterhin für eine ausreichende Abdichtung sorgt.

Durch die Abdichtung der Lagereinheit mit Dichtringen ist es vorteilhafterweise möglich, dass die Lagereinheit in dem Sickerkasten in dem Behälter trocken angeordnet ist. Damit wird einerseits erzielt, dass das Lager der Hohlwelle in einer definierten Umgebung ohne Verschmutzung betrieben wird und so eine äußerst lange Lebensdauer erreicht. Zum anderen wird durch die Anordnung der Lagereinheit in dem Sickerkasten ermöglicht, dass der Sickerkasten gleichzeitig zur Trennung der geklärten und der ungeklärten Flüssigkeitsbereiche dient. Hierdurch wird ein großer Bereich geschaffen, welcher einerseits zum Lagern und andererseits zum Abdichten der Hohlwelle und des Permeatabflusses dient. In diesem Lagerbereich ist die Abdichtung sehr zuverlässig möglich, da genügend Bauraum vorhanden ist, um mehrere Abdichtungen einzubringen und damit eine sichere Abdichtung des Permeatabflusses zu gewährleisten.

Münden die Hohlwelle und das Anschlussstück in dem Sickerkasten ineinander, so wird wiederum eine besonders zuverlässige Abdichtung erzielt, da der Sickerkasten zusätzlich zu den angeordneten Dichtringen für eine Abtrennung der geklärten von der ungeklärten Flüssigkeit sorgt. Auch wenn die Dichtringe defekt sind, tritt nicht unmittelbar die geklärte und die ungeklärte Flüssigkeit miteinander in Kontakt, sondern läuft zuerst in den Sickerkasten. Aus dem Sickerkasten kann die ausgetretene Flüssigkeit abgesaugt werden oder es kann zumindest mittels Sensoren angezeigt werden, dass die Dichtvorrichtung defekt ist und in Stand gesetzt werden muss.

Für eine besonders gute Abdichtung ist vorgesehen, dass an zumindest einem Dichtelement, insbesondere zwischen zwei Dichtringen eines Dichtelementes, eine Fett- oder Flüssigkeitskammer angeordnet ist zum Absperren des Sickerkastens gegenüber der geklärten und ungeklärten Flüssigkeit. Hiermit wird eine zusätzliche Sicherung zur Abdichtung geschaffen. Die Fett- oder Flüssigkeitskammer ist üblicherweise zwischen zwei Dichtringen vorgesehen. Die jeweilige Flüssigkeit muss somit zwei Dichtringe und die Fett- oder Flüssigkeitskammer durchdringen, um aus dem Behälter bzw. Permeatabfluss austreten zu können. Auch wenn dies tatsächlich geschehen sollte, treten die beiden Flüssigkeiten noch nicht miteinander in Kontakt, sondern es fließt die jeweilige Flüssigkeit zunächst in den Sickerkasten. Ein Kontakt der beiden Flüssigkeiten, insbesondere ein Einströmen der ungeklärten Flüssigkeit in den Permeatabfluss ist somit ausgeschlossen. Zusätzlich dient das Fett als Schmierfilm zwischen den Abdichtelementen und den Verschleißbuchsen, was sich positiv auf die Lebensdauer auswirkt.

Zur Feststellung einer schadhaften Dichtstelle ist vorteilhafterweise vorgesehen, dass der Fett- oder Flüssigkeitskammer ein Sensor zugeordnet ist zur Überwachung der Menge und/oder des Druckes des Fettes oder der Flüssigkeit. Sobald die Menge oder der Druck des Fettes bzw. der Flüssigkeit verringert wird, kann daraus geschlossen werden, dass die Dichtung ein Leck aufweist und Fett oder Flüssigkeit aus der Fett- oder Flüssigkeitskammer austritt. Eine Wartung der Dichtung ist dann erforderlich.

Besonders vorteilhaft ist es, wenn in dem Sickerkasten ein Sensor zur Feststellung von Wassereintritt in den Sickerkasten angeordnet ist. Der Sickerkasten dient dabei als Auffangbehälter für austretende Flüssigkeit, welche nach einer Erfassung mit dem Sensor beispielsweise abgepumpt werden kann. Darüber hinaus kann hiermit festgestellt werden, ob die Dichtung in unzulässiger Weise defekt ist und eine entsprechende Wartung veranlasst werden.

Die Filtereinrichtung wird in besonders einfacher Weise mit einem Kettenantrieb angetrieben. Das Antriebsrad des Kettenantriebes ist an der Hohlwelle im Bereich eines Gleitlagers angeordnet. Das Gleitlager nimmt dabei die auftretenden Kräfte des Kettenantriebes in besonders vorteilhafter Weise auf. Zudem kann ein Gleitlager in der Abwasserflüssigkeit ohne besondere Abdichtung angeordnet sein. Es ist damit eine sehr einfache und kostengünstige Lagerung der Hohlwelle und damit der Filtereinrichtung in dem Behälter möglich. Selbstverständlich ist auch die Lagerung mit einem Wälzlager an dieser Stelle möglich.

Durch die Aufteilung der Hohlwelle in zwei voneinander getrennte Kammern ist die Hohlwelle sowohl zur Abführung des Permeats als auch zur Reinigung der Filterelemente einsetzbar. Die eine Kammer der Hohlwelle dient dabei zur Abführung des Permeats. In der zweiten Kammer ist eine Reinigungseinrichtung zur Reinigung der Filterelemente mit einem Reinigungsmedium, beispielsweise mit Spülluft oder Spülflüssigkeit angeordnet. Die Reinigungseinrichtung bläst dabei Spülluft in die zweite Kammer der Hohlwelle. Sind in der Hohlwelle im Bereich der zweiten Kammer Öffnungen vorgesehen, so tritt die Spülluft durch die Öffnungen aus der Hohlwelle aus und streicht an den Filterelementen entlang bis zur Oberfläche der ungeklärten Flüssigkeit. Ablagerungen, welche sich an den Filterelementen befinden, werden dabei von der Spülluft mitgerissen und reinigen damit die Oberfläche der Filterelemente.

Besonders vorteilhaft ist es, wenn als Reinigungseinrichtung eine Lanze zur Zuführung der Spülluft in die Hohlwelle vorgesehen ist. Die Lanze weist Öffnungen auf, aus denen die Spülluft austreten kann. Sie ist üblicherweise in der Hohlwelle stationär angeordnet, kann aber beispielsweise auch axial beweglich ausgeführt sein, um eine besonders gute Reinigung zu bewirken.

Um auch die Lanze von Verunreinigungen befreien zu können, ist vorteilhafterweise der Lanze eine Einrichtung zur Rückspülung zugeordnet. Diese Einrichtung, welche ebenfalls in der Hohlwelle angeordnet ist, ermöglicht, dass durch die Lanze anstelle der Spülluft eine Reinigungsflüssigkeit hindurchgefördert wird, welche Verunreinigungen in der Lanze entfernen. Diese Reinigungsflüssigkeit kann mit chemischen Zusätzen versehen sein, um eine besonders gründliche Reinigung zu bewirken.

Weitere Vorteile der Erfindung sind in den nachfolgenden Ausführungsbeispielen beschrieben. Es zeigt:
- **Figur 1**: eine schematische Darstellung einer erfindungsgemäßen Filtereinrichtung,

- **Figur 2**: eine schematische Darstellung der Lagerung der Hohlwelle im Bereich der Übergangsstelle zwischen Hohlwelle und stationärer Rohrleitung und
- **Figur 3**: eine schematische Darstellung des Antriebs und der Lagerung der Hohlwelle an dem der Übergangsstelle abgewandten Ende.

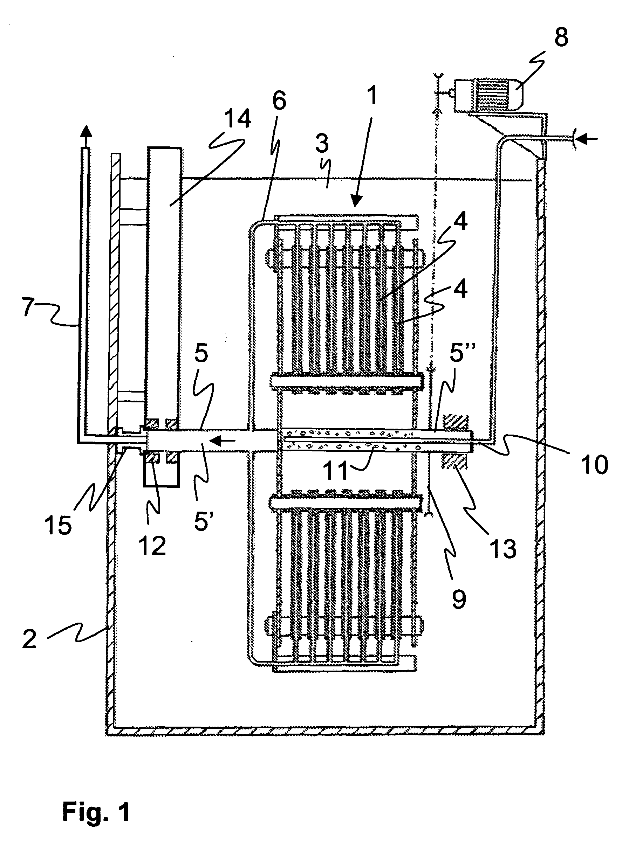

In Figur 1 ist eine Filtereinrichtung 1 dargestellt, welche sich in einem Behälter 2 mit ungereinigter Flüssigkeit, insbesondere Abwasser 3 befindet. Die Filtereinrichtung 1 besteht aus mehreren, voneinander beabstandeten Filterelementen 4, die kreis- oder polygonförmig an einer drehbar gelagerten Hohlwelle 5 angeordnet sind. Das Abwasser 3 liegt an der Aussenseite der Filterelemente 4 an und wird durch die Filterelemente 4 hindurch in ein Leitungssystem 6 gesaugt. Die Verunreinigungen des Abwassers bleiben an der Filtereinrichtung 1 hängen und sauberes, geklärtes Wasser strömt in das Leitungssystem 6. Das Leitungssystem 6 mündet in der Hohlwelle 5 und wird aus dieser in eine stationäre Rohrleitung 7 aus dem Behälter 2 gefördert.

Die Hohlwelle 5 wird zusammen mit der Filtereinrichtung 1 über einen Antriebsmotor 8, in diesem Beispiel mit einem Kettenantrieb, welcher auf ein Antriebsrad 9 der Hohlwelle 5 wirkt, angetrieben. In die Hohlwelle 5 mündet eine Lanze 10, über welche ein Spülmedium, beispielsweise Spülluft oder Spülflüssigkeit in das Innere der Hohlwelle 5 geleitet wird. Die Hohlwelle 5 ist im Bereich der Lanze 10 mit Öffnungen 11 versehen, durch welche das Spülmedium der Lanze 10 aus der Hohlwelle 5 austritt und nach oben, entlang der Filterelemente 4, aus dem Abwasser 3 entweicht. Dabei streicht das Spülmedium Verunreinigungen, welche sich an den Filterelemente 4 angelagert haben, ab und reinigt hierbei die Filterelemente 4.

Die Hohlwelle 5 ist an ihren beiden Enden mit einem Lager 12 und 13 drehbar gelagert. Das Lager 13 befindet sich im Abwasser 3 und ist daher als Gleitlager ausgeführt. Selbstverständlich ist bei einer anderen Ausgestaltung auch die Verwendung eines Wälzlagers an dieser Stelle möglich. Das Lager 12 ist als Wälzlager ausgeführt und befindet sich im vorzugsweise trockenen Bereich. Das Lager 12 ist in einem Sickerkasten 14 eingebaut und lagert die Hohlwelle 5 am Übergang zu einem Flansch 15, welcher die Verbindung zu der Rohrleitung 7 schafft. Der Flansch 15 ist fest mit dem Behälter 2 bzw. der stationären Rohrleitung 7 und dem Sickerkasten 14 verbunden, so dass das Eintreten von Abwasser in den Sickerkasten 14 von dieser Seite aus nicht möglich ist. Die Hohlwelle 5 ist ihrerseits gegenüber dem Sickerkasten 14 derart abgedichtet, dass das Eintreten von gereinigter Flüssigkeit in den Sickerkasten 14 ebenso verhindert wird, wie das Eintreten von Abwasser 3 in den Sickerkasten 14.

In Figur 1 ist darüber hinaus zu sehen, dass die Hohlwelle 5 in zwei Kammern 5' und 5" unterteilt ist. In der Kammer 5' wird die geklärte Flüssigkeit aus dem Behälter 2 befördert, während die Kammer 5" die Öffnungen 11 aufweist, durch welche die Spülluft, welche aus der Lanze 10 der Filtereinrichtung 1 zugeführt wird, entweichen kann. Die beiden Kammern 5' und 5" sind nicht miteinander verbunden.

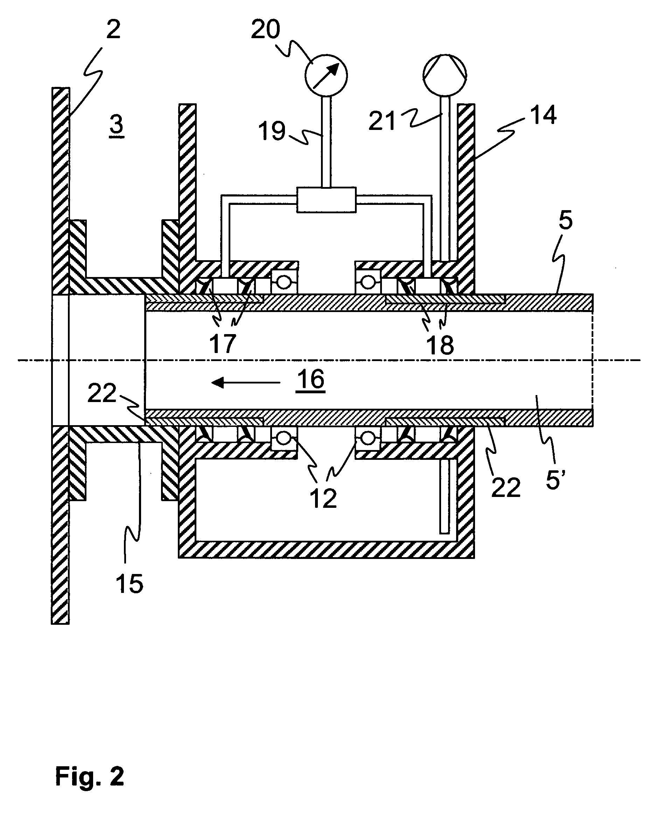

In Figur 2 ist schematisch die Lagerung der Hohlwelle 5 in dem Sickerkasten 14 und die Verbindung mit dem Flansch 15 und der Wand des Behälters 2 dargestellt. Die Hohlwelle 5 befindet sich dabei mit ihrem Ende in dem Flansch 15 und schafft somit eine Verbindung, um die geklärte Flüssigkeit aus dem Behälter 2 zu fördern. Um eine Abdichtung und somit Trennung der ungeklärten Flüssigkeit 16 von dem Abwasser 3 zu erhalten, ist innerhalb des Sickerkastens 14 die Hohlwelle 5 sowohl gegenüber dem Abwasser 3 als auch gegenüber der geklärten Flüssigkeit 16 mit Dichtelementen 17 und 18 abgedichtet. Die Dichtelemente 17 liegen am Ende der Hohlwelle 5 an und bewirken eine Dichtung der geklärten Flüssigkeit 16 gegenüber dem Sickerkasten 14. Die weiter von dem Ende der Hohlwelle 5 beabstandeten Dichtelemente 18 bewirken eine Abdichtung des Abwassers 3 in Bezug auf den Sickerkasten 14.

Sowohl die Dichtelemente 17 als auch die Dichtelemente 18 bestehen jeweils aus mindestens zwei Dichtringen, welche beabstandet voneinander angeordnet sind. Zwischen den jeweiligen Dichtringen befindet sich eine Kammer, in welche durch eine Leitung 19 Fett eingepresst wird. Alternativ hierzu ist es auch möglich Flüssigkeit oder Luft einzupressen, um die Dichtwirkung der Dichtelemente 17 und 18 zu verstärken bzw. zu überprüfen. Der Leitung 19 ist darüber hinaus eine Messeinrichtung 20 zugeordnet, mit welcher festgestellt werden kann, ob ein Fett- oder Flüssigkeitsverbrauch vorliegt. Wenn dies der Fall ist, kann daraus geschlossen werden, dass zumindest eines der Dichtelemente defekt ist und es können entsprechende Maßnahmen dagegen getroffen werden.

Ein wesentlicher Vorteil der Anordnung der Dichtelemente 17 und 18 in Bezug auf die Hohlwelle 5 und den Sickerkasten 14 besteht darin, dass die geklärte Flüssigkeit 16 und das Abwasser 3 sowohl durch Dichtelemente als auch durch den Sickerkasten 14 voneinander getrennt sind. Auch bei Versagen eines oder sogar beider Dichtelemente 17 und 18 besteht nicht unmittelbar die Gefahr, dass Abwasser 3 in die Leitung für die geklärte Flüssigkeit 16 gelangen kann und somit die geklärte Flüssigkeit 16 verunreinigen würde. Erst wenn der Sickerkasten 14 bis zur Höhe der Dichtelemente aufgefüllt ist, könnte dies geschehen. Um dies zu vermeiden, kann weiterhin vorgesehen sein, dass in dem Sickerkasten 14 eine Absaugeinrichtung 21 angeordnet ist. Sobald sich ausgetretene Flüssigkeit in dem Sickerkasten 14 befindet, wird diese über die Absaugeinrichtung 21 aus dem Sickerkasten 14 entfernt und dem Abwasser 3 wieder zugeleitet.

Das Ende der Hohlwelle 5 ist mit einer Verschleißbuchse 22 versehen. Die Verschleißbuchse 22 ist in dem Bereich der Dichtungselemente 17 und 18 angeordnet. Bei Bedarf kann er ausgewechselt werden, ohne dass die Filtereinrichtung 1 aus dem Behälter 2 ausgebaut wird. Hierdurch ist eine besonders kostengünstige Wartung der Anlage ermöglicht.

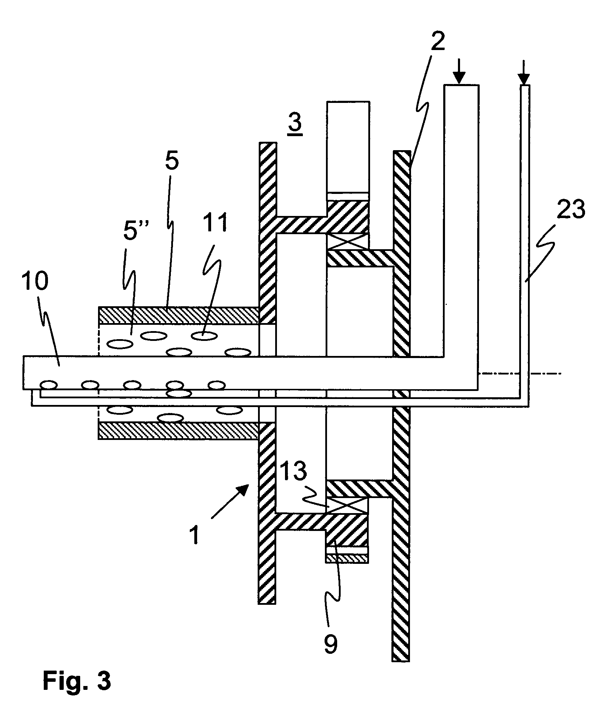

Figur 3 zeigt eine schematische Darstellung der Lagerung der Hohlwelle 5 im Bereich des Antriebs der Hohlwelle 5. Es ist daraus ersichtlich, dass sich die Lagerung 13 im Bereich des Abwassers 3 befindet. Das Lager 13 ist deshalb vorzugsweise als Gleitlager ausgebildet. Das Antriebsrad 9 wirkt direkt auf die Filtereinrichtung 1, welche an der Hohlwelle 5 befestigt ist. Es wird von dem Motor 8 (Figur 1) mittels einer Kette oder eines Riemens angetrieben.

In die Hohlwelle 5 bzw. deren Kammer 5" ragt die Lanze 10, welche stationär ausgeführt ist. Am Ende der Lanze 10 ist eine Spülleitung 23 vorgesehen. Durch die Spülleitung 23 kann Spülflüssigkeit durch die Lanze 10 entgegen der Strömungsrichtung der Spülluft geleitet werden. Hierdurch ist eine Reinigung der Lanze 10 sehr einfach möglich.

Die vorliegende Erfindung ist nicht auf die dargestellten Ausführungsbeispiele beschränkt. Unter dem in der Anmeldung verwendeten Begriff Behälter ist selbstverständlich auch ein Becken oder eine Wanne zu verstehen. Auch können an Stelle der dargestellten radialen Dichtelemente bei einer entsprechenden Konstruktion auch axiale Abdichtelemente verwendet werden. Insbesondere Abwandlungen im Rahmen der Erfindung sind jederzeit möglich.

## Patentansprüche

1. Fittereinrichtung für einen, eine ungeklärte, verschmutzte Flüssigkeit, insbesondere Abwasser (3) enthaltenden Behälter (2) zum Klären dieser Flüssigkeit, bestehend aus mehreren voneinander beabstandeten Filterelementen (4), die kreis- oder polygonförmig an einer drehbar gelagerten Hohlwelle (5) angeordnet sind, wobei die Filterelemente (4) mit der Hohlwelle (5) verbunden sind um geklärte Flüssigkeit als Permeat (16) durch die Hohlwelle (5) aus dem Behälter (2) über eine stationäre Rohrleitung (7) abzuführen, **dadurch gekennzeichnet, dass** an der Übergangsstelle zwischen drehender Hohlwelle (5) und stationärer Rohrleitung (7) ein abgedichteter Sickerkasten (14) angeordnet ist, dass der Sickerkasten (14) den geklärten von dem ungeklärten Flüssigkeitsbereich trennt und dass die drehende Hohlwelle (5) über zumindest zwei Dichtelemente (17, 18) die ungeklärte Flüssigkeit (3) innerhalb des Sickerkastens (14) von der gereinigten Flüssigkeit (16) trennt und zwischen den Dichtelementen (17, 18) ein Medium zum Trennen von ungeklärter (3) und geklärter Flüssigkeit (16) angeordnet ist.

2. Filtereinrichtung nach Anspruch 1, **dadurch gekennzeichnet, dass** das Medium flüssig oder gasförmig ist.

3. Filtereinrichtung nach einem der vorhergehenden Ansprüche, **dadurch gekennzeichnet, dass** der Sickerkasten (14) in dem Behälter (2) angeordnet ist.

4. Filtereinrichtung nach einem der vorhergehenden Ansprüche, **dadurch gekennzeichnet, dass** die Hohlwelle (5) eine axiale Öffnung zum Abführen des Permeats (16) aus dem Behälter (2) aufweist.

5. Filtereinrichtung nach einem der vorhergehenden Ansprüche, **dadurch gekennzeichnet, dass** die Hohlwelle (5) in einen feststehenden Anschlussstück, insbesondere einem Flansch (15) oder Stutzen in der Wand des Behälters (2) mündet.

6. Filtereinrichtung nach einem der vorhergehenden Ansprüche, **dadurch gekennzeichnet, dass** zwischen Hohlwelle (5) und Abdichtelementen (17,18) eine Verschleißbuchse (22) angeordnet ist.

7. Filtereinrichtung nach einem der vorhergehenden Ansprüche, **dadurch gekennzeichnet, dass** die Hohlwelle (5) und das Anschlussstück über eine Radial- und/oder Axialdichtung drehbar miteinander verbunden sind.

8. Filtereinrichtung nach einem der vorhergehenden Ansprüche; **dadurch gekennzeichnet, dass** die Hohlwelle (5) in einer Lagereinheit (12, 13) mit einem Wälz- und/oder Gleitlager gelagert ist.

9. Filtereinrichtung nach Anspruch 8 **dadurch gekennzeichnet, dass** die Lagereinheit (12) mit Dichtelementen (17, 18), insbesondere Dichtringen gegenüber der geklärten und ungeklärten Flüssigkeit (3, 16) abgedichtet ist.

10. Filtereinrichtung nach Anspruch 8 oder 9, **dadurch gekennzeichnet, dass** die Lagereinheit (12) in dem Sickerkasten (14) in dem Behälter (2) trocken angeordnet ist.

11. Filtereinrichtung nach einem der vorhergehenden Ansprüche, **dadurch gekennzeichnet, dass** die Hohlwelle (5) und das Anschlussstück in dem Sickerkasten (14) ineinander münden.

12. Filtereinrichtung nach einem der vorhergehenden Ansprüche, **dadurch gekennzeichnet, dass** an zumindest einem Dichtelement (17, 18) eine Fett- oder Flüssigkeitskammer als Sperrmedium, insbesondere zwischen zwei Dichtringen eines Dichtelementes (17, 18) angeordnet ist zum Absperren des Mediums gegenüber der geklärten und ungeklärten Flüssigkeit (3, 16).

13. Filtereinrichtung nach einem der vorhergehenden Ansprüche, **dadurch gekennzeichnet, dass** das Sperrmedium gegenüber dem Abwasser (3) oder dem Permeat (16) einen Überdruck aufweist

14. Filtereinrichtung nach einem der vorhergehenden Ansprüche, **dadurch gekennzeichnet, dass** das Sperrmedium auch als Schmiermedium zwischen den Abdichtelementen (17, 18) und den Verschleißbuchsen (22) dienen kann

15. Filtereinrichtung nach einem der vorhergehenden Ansprüche, **dadurch gekennzeichnet, dass** ein Sensor (20) vorgesehen ist zur Überwachung der Menge oder des Drucks des Sperrmediums um eine Leckage der Dichtelemente (17, 18) feststellen zu können.

16. Filtereinrichtung nach einem der vorhergehenden Ansprüche, **dadurch gekennzeichnet, dass** in dem Sickerkasten (14) ein Sensor zur Feststellung von Wassereintritt in den Sickerkasten (14) angeordnet ist.

17. Filtereinrichtung nach einem der vorhergehenden Ansprüche, **dadurch gekennzeichnet, dass** in dem Sickerkasten (14) eine Absaugeinrichtung (21) zum Entfernen eingetretener Flüssigkeit angeordnet ist.

18. Filtereinrichtung nach einem der vorhergehenden Ansprüche, **dadurch gekennzeichnet, dass** die Filtereinrichtung (1) mit einem Ketten- oder Riemenantrieb (8,9) angetrieben ist.

19. Filtereinrichtung nach einem der vorhergehenden Ansprüche, **dadurch gekennzeichnet, dass** die Filtereinrichtung (1) über die Hohlwelle (5) im Bereich des Ketten- oder Riemenantriebs (8, 9) mit einem Gleitlager (13) gelagert ist.

20. Filtereinrichtung nach einem der vorhergehenden Ansprüche, **dadurch gekennzeichnet, dass** die Hohlwelle (5) zwei voneinander getrennte Kammern (5', 5") aufweist, wobei in der ersten Kammer (5') das Permeat (16) geführt ist und in der zweiten Kammer (5") eine Reinigungseinrichtung zur Reinigung der Filterelemente (4) mit einem Spülmedium angeordnet ist

21. Filtereinrichtung nach einem der vorhergehenden Ansprüche, **dadurch gekennzeichnet, dass** die Hohlwelle (5) im Bereich der zweiten Kammer (5") Öffnungen (11) aufweist.

22. Filtereinrichtung nach einem der vorhergehenden Ansprüche, **dadurch gekennzeichnet, dass** als Reinigungseinrichtung eine Lanze (10) zur Zuführung von Spülmedium angeordnet ist.

23. Filtereinrichtung nach Anspruch 22, **dadurch gekennzeichnet, dass** der Lanze (10) eine Einrichtung (23) zur Rückspülung der Lanze (10) zugeordnet ist.

## Claims

1. A filter apparatus for a container (2) containing non-clarified contaminated liquid, especially wastewater (3), for clarifying this liquid, consisting of several spaced filter elements (4) arranged in a circle or a polygon on a rotatably supported hollow shaft (5), which filter elements (4) are connected to the hollow shaft (5) in order to remove clarified liquid as permeate (16) through the hollow shaft (5) out of the container (2) via a stationary pipeline (7), **characterized in that** a sealed drain box (14) is arranged at the transitional point between the rotating hollow shaft (5) and the stationary pipeline (7) that the drain box (14) separates the clarified liquid area from the non-clarified liquid area and that the rotating hollow shaft (5) separates the non-clarified liquid (3) from the purified liquid (16) within the drain box (14) via at least two sealing elements (17, 18) and that a medium is arranged between the sealing elements (17, 18) for separating non-clarified (3) and clarified liquid (16).

2. Filter apparatus according to claim 1, **characterized in that** the medium is liquid or gaseous.

3. Filter apparatus according to one of the previous claims, **characterized in that** the drain box (14) is arranged in the container (2).

4. Filter apparatus according to one of the previous claims, **characterized in that** the hollow shaft (5) has an axial opening for removing the permeate (16) from the container (2).

5. Filter apparatus according to one of the previous claims, **characterized in that** the hollow shaft (5) empties into a stationary connection piece, in particular a flange (15) or connecting piece in the wall of the container (2).

6. Filter apparatus according to one of the previous claims, **characterized in that** a wear sleeve (22) is arranged between the hollow shaft (5) and the sealing elements (17, 18).

7. Filter apparatus according to one of the previous claims, **characterized in that** the hollow shaft (5) and the connection piece are rotatably connected to one another by a radial and/or axial seal.

8. Filter apparatus according to one of the previous claims, **characterized in that** the hollow shaft (5) is supported in a bearing unit (12, 13) with a roller bearing and/or friction bearing.

9. Filter apparatus according to claims 8, **characterized in that** the bearing unit (12) is sealed with sealing elements (17, 18), especially sealing rings against the clarified and non-clarified liquid (3, 16).

10. Filter apparatus according to claim 8 or 9, **characterized in that** the bearing unit (12) in the drain box (14) is arranged dry in the container (2).

11. Filter apparatus according to one of the previous claims, **characterized in that** the hollow shaft (5) and the connection piece empty into one another within the drain box (14).

12. Filter apparatus according to one of the previous claims, **characterized in that** a grease chamber or liquid chamber is arranged as a blocking medium on at least one sealing element (17, 18), especially between two sealing rings of a sealing element (17, 18), for blocking off the medium from the clarified and the non-clarified liquid (3, 16).

13. Filter apparatus according to one of the previous claims, **characterized in that** the blocking medium has an overpressure relative to the wastewater (3) or the permeate (16).

14. Filter apparatus according to one of the previous claims, **characterized in that** the blocking medium can also function as a lubricating medium between the sealing elements (17, 18) and the wear sleeves (22).

15. Filter apparatus according to one of the previous claims, **characterized in that** a sensor (20) is provided for monitoring the amount or the pressure of the blocking medium in order to be able to determine a leakage of the sealing elements (17, 18).

16. Filter apparatus according to one of the previous claims, **characterized in that** a sensor is arranged in the drain box (14) for determining the entrance of water into the drain box (14).

17. Filter apparatus according to one of the previous claims, **characterized in that** a suction removal apparatus (21) is arranged in the drain box (14) for removing entered liquid.

18. Filter apparatus according to one of the previous claims, **characterized in that** the filter apparatus (1) is driven by a chain or belt drive (8, 9).

19. Filter apparatus according to one of the previous claims, **characterized in that** the filter apparatus (1) is supported via the hollow shaft (5) in the area of the chain drive or belt drive (8, 9) by a friction bearing (13).

20. Filter apparatus according to one of the previous claims, **characterized in that** the hollow shaft (5) comprises two separate chambers (5', 5"), that the permeate (16) is conducted in the first chamber (5') and that a cleaning apparatus for cleaning the filter elements (4) with a rinsing medium is arranged in the second chamber (5").

21. Filter apparatus according to one of the previous claims, **characterized in that** the hollow shaft (5) has openings (11) in the area of the second chamber (5").

22. Filter apparatus according to one of the previous claims, **characterized in that** a lance (10) for supplying rinsing medium is arranged as cleaning apparatus.

23. Filter apparatus according to claim 22, **characterized in that** an apparatus (23) for the back rinsing of the lance (10) is assigned to the lance (10).

## Revendications

1. Dispositif de filtration pour un réservoir (2) contenant un liquide contaminé non clarifié, en particulier une eau usée (3), destiné à clarifier ce liquide, comportant une pluralité d'éléments de filtration (4) espacés et agencés de façon rotative sur un arbre creux (5) selon un cercle ou polygone, dans lequel les éléments de filtration (4) sont connectés à l'arbre creux (5) pour évacuer le liquide clarifié hors du réservoir (2) sous forme d'un perméat (16) à travers l'arbre creux (5) via une canalisation stationnaire (7), **caractérisé en ce que** un compartiment (14) étanche est agencé à la jonction entre l'arbre creux (5) rotatif et la canalisation stationnaire (7), **en ce que** le compartiment (14) sépare les phases clarifiée et non clarifiée du liquide, **en ce que** l'arbre creux (5) rotatif sépare le liquide non clarifié (3) du liquide épuré (16) via au moins deux éléments d'étanchéité (17, 18) à l'intérieur du compartiment (14) et **en ce que** un fluide de séparation des phases clarifiée (16) et non clarifiée (3) du liquide est agencé entre les éléments d'étanchéité (17, 18).

2. Dispositif de filtration selon la revendication 1, **caractérisé en ce que** le fluide est liquide ou gazeux.

3. Dispositif de filtration selon l'une des revendications précédentes, **caractérisé en ce que** le compartiment (14) est agencé dans le réservoir (2).

4. Dispositif de filtration selon l'une des revendications précédentes, **caractérisé en ce que** l'arbre creux (5) comporte un orifice axial permettant l'évacuation du perméat (16) hors du réservoir (2).

5. Dispositif de filtration selon l'une des revendications précédentes, **caractérisé en ce que** l'arbre creux (5) débouche dans une pièce de connexion fixe, soit en particulier une bride (15) ou un support disposé sur la paroi du réservoir (2).

6. Dispositif de filtration selon l'une des revendications précédentes, **caractérisé en ce que** une bague d'usure (22) est agencée entre l'arbre creux (5) et les éléments d'étanchéité (17, 18).

7. Dispositif de filtration selon l'une des revendications précédentes, **caractérisé en ce que** l'arbre creux (5) est connecté de façon rotative à la pièce de connexion via un joint d'étanchéité radial et/ou joint d'étanchéité axial.

8. Dispositif de filtration selon l'une des revendications précédentes, **caractérisé en ce que** l'arbre creux (5) est monté sur un palier (12, 13) comportant un roulement à galets et/ou un coussinet.

9. Dispositif de filtration selon la revendication 8, **caractérisé en ce que** le palier (12) est isolé des liquides clarifié et non clarifié (3, 16) par des éléments d'étanchéité (17, 18), et en particulier par des bagues d'étanchéité.

10. Dispositif de filtration selon la revendication 8 ou 9, **caractérisé en ce que** le palier (12) est monté à sec dans le compartiment (14) à l'intérieur du réservoir (2).

11. Dispositif de filtration selon l'une des revendications précédentes, **caractérisé en ce que** l'arbre creux (5) et la pièce de connexion s'emboîtent l'un dans l'autre dans le compartiment (14).

12. Dispositif de filtration selon l'une des revendications précédentes, **caractérisé en ce que** une chambre à graisse ou à liquide est agencée sur au moins une élément d'étanchéité (17, 18), en particulier entre deux bagues d'étanchéité d'un élément d'étanchéité (17, 18), pour fournir le fluide d'étanchéité et séparer le fluide des liquides clarifié et non clarifié (3, 16).

13. Dispositif de filtration selon l'une des revendications précédentes, **caractérisé en ce que** le fluide d'étanchéité est soumis à une surpression par rapport aux eaux usées (3) ou au perméat (16).

14. Dispositif de filtration selon l'une des revendications précédentes, **caractérisé en ce que** le fluide d'étanchéité peut également faire office de lubrifiant entre les éléments d'étanchéité (17, 18) et ses bagues d'usure (22).

15. Dispositif de filtration selon l'une des revendications précédentes, **caractérisé en ce que** un capteur (20) est pourvu pour surveiller la quantité ou la pression du fluide d'étanchéité afin de pouvoir détecter une fuite des éléments d'étanchéité (17, 18).

16. Dispositif de filtration selon l'une des revendications précédentes, **caractérisé en ce que** un capteur est agencé dans le compartiment (14) pour détecter une entrée d'eau dans le compartiment (14).

17. Dispositif de filtration selon l'une des revendications précédentes, **caractérisé en ce que** un dispositif d'aspiration (21) est agencé dans le compartiment (14) pour éliminer le liquide qui y a pénétré.

18. Dispositif de filtration selon l'une des revendications précédentes, **caractérisé en ce que** le dispositif de filtration (1) est entraîné par une transmission à chaîne ou courroie (8, 9).

19. Dispositif de filtration selon l'une des revendications précédentes, **caractérisé en ce que** le dispositif de filtration (1) est monté sur l'arbre creux (5) à l'aide d'un coussinet (13) à hauteur de la transmission à chaîne ou courroie (8, 9).

20. Dispositif de filtration selon l'une des revendications précédentes, **caractérisé en ce que** l'arbre creux (5) comporte deux chambres (5', 5") séparées entre elles, dans lequel le perméat (16) est conduit dans la première chambre (5') et un dispositif de nettoyage des éléments de filtration (4) au moyen d'un liquide de rinçage est agencé dans la deuxième chambre (5").

21. Dispositif de filtration selon l'une des revendications précédentes, **caractérisé en ce que** l'arbre creux (5) comporte des orifices (11) dans la deuxième chambre (5").

22. Dispositif de filtration selon l'une des revendications précédentes, **caractérisé en ce que** une lance (10) est agencée comme dispositif de nettoyage fournissant le liquide de rinçage.

23. Dispositif de filtration selon la revendication 22, **caractérisé en ce que** la lance (10) comporte un dispositif (23) de rinçage à contre-courant de la lance (10).
